# EUROPEAN PATENT APPLICATION

(11) **EP 4 549 147 A1**
(43) Date of publication of application: **07.05.2025**
(21) Application number: 23831460.3
(22) Date of filing: 27.06.2023
(51) Int. Cl.: B32B 27/00, B29C 45/14, B32B 3/30

(54) **TRANSFER SHEET, DECORATIVE MOLDED ARTICLE, AND METHOD FOR PRODUCING DECORATIVE MOLDED ARTICLE**

(30) Priority: 27.06.2022 JP 2022103004
(71) Applicant: Dai Nippon Printing Co., Ltd., Tokyo 162-8001 (JP)
(72) Inventor: OOTA, Naoki, Tokyo 162-8001 (JP); NODA, Akihisa, Tokyo 162-8001 (JP); SAKONAKA, Kazuyuki, Tokyo 162-8001 (JP)
(74) Representative: Beck Greener LLP
(86) International application number: PCT/JP2023/023824
(87) International publication number: WO 2024/005020

(57) **Abstract**

There is provided a transfer sheet capable of imparting, to a surface of a decorative molded article, an uneven profile that is readily visible when observed from various angles. A transfer sheet comprising a transfer layer on a release sheet, wherein the release sheet comprises, in order from the transfer layer side, a release layer and a substrate, wherein the release layer comprises an uneven portion containing a binder resin and a matting agent and having a plurality of protrusions on the transfer layer side, and a flat portion whose surface on the transfer layer side is relatively flatter than the uneven portion, and wherein the plurality of protrusions of the uneven portion of the release layer are in contact with the transfer layer.

## Description

### Technical Field

The present disclosure relates to a transfer sheet, a decorative molded article, and a method for producing a decorative molded article.

### Background Art

A lamination technique using decorative sheets, for purposes such as providing surface protection and design decorativeness, is employed for resin molded articles used for automobile interior and exterior materials, building interior materials, or household electric appliances, and resin molded articles used for organic glass for use as an inorganic glass substitute material, for example. Decorative sheets used in this technique can be broadly classified into a laminate-type decorative sheet and a transfer-type decorative sheet (that is, a transfer sheet).

In the laminate-type decorative sheet, a protective layer is laminated on a support substrate to be positioned on the outermost surface, and the laminate-type decorative sheet is used by laminating a molding resin on the support substrate side, such that the support substrate is incorporated into the resin molded article. On the other hand, in the transfer-type decorative sheet, a protective layer is laminated on a support substrate either directly or optionally with a flat portion interposed therebetween, and the transfer-type decorative sheet is used by laminating a molding resin on the side opposite to the support substrate and then peeling off the support substrate, such that the support substrate does not remain in the resin molded article. These two types of decorative sheets are selectively used according to, for example, the profile and the desired function of the resin molded article.

A problem with the transfer-type decorative sheet is that it is more difficult to design a resin composition for forming the protective layer than in the laminate-type decorative sheet, because, for example, other layers such as a design layer and an adhesive layer may be laminated on the protective layer; when a flat portion is provided, the protective layer is laminated on the flat portion; the transferring substrate needs be peeled off from the protective layer during molding; and the surface exposed after peeling off the transferring substrate needs to exhibit excellent physical properties.

An injection molding simultaneous decorating method has been employed for decorating a resin molded body with a complicated surface profile, such as a three-dimensional curved surface. The injection molding simultaneous decorating method is a method in which, during injection molding, a decorative sheet inserted into a mold for in-mold molding is integrated with a molten injection resin injected into a cavity, such that the surface of the resin molded body is decorated. Typically, the injection molding simultaneous decorating method is broadly classified into an injection molding simultaneous lamination decorating method and an injection molding simultaneous transfer decorating method, according to the difference in the structure of the decorative sheet (whether the laminate-type decorative sheet or the transfer-type decorative sheet as described above) to be integrated with the resin molded body (whether the laminate-type decorative sheet or the transfer-type decorative sheet as described above).

In the injection molding simultaneous transfer decorating method, the transfer layer side of the transfer sheet is placed toward the inside of the mold and heated from the transfer layer side by a heating platen to mold the transfer sheet along the mold inner profile. Then, a molten injection resin is injected into the cavity to integrate the transfer sheet with the injection resin. Then, the resin molded body is cooled and removed from the mold, and then the transferring substrate of the transfer sheet is peeled off to obtain a decorative molded article having a decorative layer to which the transfer layer has been transferred.

### Citation List

### Patent Literature

Patent Literature 1: Japanese Patent No. 4885281
Patent Literature 2: Japanese Patent No. 6866963

### Summary of Invention

### Technical Problem

For products required to have a matte feeling as a design, a transfer sheet provided with a matting layer having fine unevenness is used for decoration. Each of PTL 1 and PTL 2 discloses a method for producing a molded article with a different matte feeling on a portion of its surface, by using a transfer sheet with a matting layer provided on a portion of the substrate.

In these transfer sheets, the matting layer is provided between a flat portion and the substrate. In addition, the side of the flat portion opposite to the matting layer is provided with a transfer layer including a protective layer and other layers. When the transfer sheet is subjected to injection molding, the flat portion is largely compressed by heat and pressure during the molding. On the other hand, the matting layer, which is harder than the flat portion, undergoes less deformation. As a result, when the transfer sheet is subjected to injection molding, the uneven profile of the matting layer is formed on the transfer layer, and the design of the uneven profile is imparted to the surface of the resulting decorative molded article.

However, when such a conventional transfer sheet is used, the design of the uneven profile on the surface of the decorative molded article is readily visible when observed from a direction perpendicular to the surface of the decorative molded article, but may be difficult to see when observed from a direction nearly horizontal with respect to the surface of the decorative molded article.

Under such circumstances, a main object of the present disclosure is to provide a transfer sheet capable of imparting, to a surface of a decorative molded article, an uneven profile that is readily visible when observed from various angles. Another object of the present disclosure is to provide a method for producing the transfer sheet and a method for producing a decorative molded article using the transfer sheet.

### Solution to Problem

The present disclosure provides the following aspects of the invention.

Item 1. A transfer sheet comprising a transfer layer on a release sheet,
wherein the release sheet comprises, in order from the transfer layer side, a release layer and a substrate,
wherein the release layer comprises:
   an uneven portion containing a binder resin and a matting agent and having a plurality of protrusions on the transfer layer side; and
   a flat portion whose surface on the transfer layer side is relatively flatter than the uneven portion, and
   wherein the plurality of protrusions of the uneven portion of the release layer are in contact with the transfer layer.

Item 2. The transfer sheet according to item 1, wherein a surface of the transfer layer in contact with the uneven portion has an uneven profile as a result of being in contact with the uneven portion, and
wherein tips of the plurality of protrusions included in the uneven profile of the transfer layer are positioned closer to the substrate than a surface of the transfer layer in contact with the flat portion.

Item 3. The transfer sheet according to item 1 or 2, wherein the matting agent contained in the uneven portion has an oil absorption value of 150 ml/100 g or more.

Item 4. The transfer sheet according to any one of items 1 to 3, wherein the plurality of protrusions of the uneven portion have an average peak height of 3.3 µm or more.

Item 5. The transfer sheet according to any one of items 1 to 4, wherein the flat portion has a thickness that is 5% or more and 650% or less of an average height of the uneven portion.

Item 6. The transfer sheet according to any one of items 1 to 5, wherein the flat portion contains the matting agent.

Item 7. A decorative molded article in which the transfer layer of the transfer sheet according to any one of items 1 to 6 is laminated on an adherend.

Item 8. A method for producing a decorative molded article, comprising the steps of:
adhering the transfer layer of the transfer sheet according to any one of items 1 to 6 to an adherend to laminate the transfer sheet on the adherend; and
peeling off the release sheet of the transfer sheet to transfer the transfer layer onto the adherend.

### Advantageous Effects of Invention

The present disclosure can provide a transfer sheet capable of imparting, to a surface of a decorative molded article, an uneven profile that is readily visible when observed from various angles. The present disclosure can also provide a method for producing the transfer sheet and a method for producing a decorative molded article using the transfer sheet.

### Brief Description of Drawings

FIG. 1 is a schematic diagram of a cross-sectional structure of one embodiment of the transfer sheet of the present disclosure.
FIG. 2 is a schematic diagram of a cross-sectional structure of one embodiment of the transfer sheet of the present disclosure.
FIG. 3 is a schematic diagram of a cross-sectional structure of one embodiment of the decorative molded article with a transferring substrate of the present disclosure.
FIG. 4 is a schematic diagram of a cross-sectional structure of one embodiment of the decorative molded article with a transferring substrate of the present disclosure.
FIG. 5 is a schematic diagram of a cross-sectional structure of one embodiment of the decorative molded article of the present disclosure.

### Description of Embodiments

A transfer sheet of the present disclosure comprises a transfer layer on a release sheet, wherein the release sheet comprises, in order from the transfer layer side, a release layer and a substrate, wherein the release layer comprises an uneven portion containing a binder resin and a matting agent and having a plurality of protrusions on the transfer layer side; and a flat portion whose surface on the transfer layer side is relatively flatter than the uneven portion, and wherein the plurality of protrusions of the uneven portion of the release layer are in contact with the transfer layer. The transfer sheet of the present disclosure comprising the above-described features can impart, to a surface of a decorative molded article, an uneven profile that is readily visible when observed from various angles. The transfer sheet, a decorative molded article with a transferring substrate, and a decorative molded article of the present disclosure will be hereinafter described in detail.

As used herein, any numerical range indicated by "... to ..." is intended to mean "... or more" and "... or less". For example, the recitation "2 to 15 mm" is intended to mean "2 mm or more and 15 mm or less". With respect to any numerical range recited herein in a stepwise manner, an upper or lower limit recited in a particular numerical range may be replaced by an upper or lower limit of another numerical range recited in a stepwise manner. Moreover, separately recited upper limits, separately recited upper and lower limits, or separately recited lower limits may be combined to define a numerical range. Furthermore, with respect to any numerical range recited herein, an upper or lower limit recited in a particular numerical range may be replaced by a value shown in the examples.

### [Transfer Sheet 10]

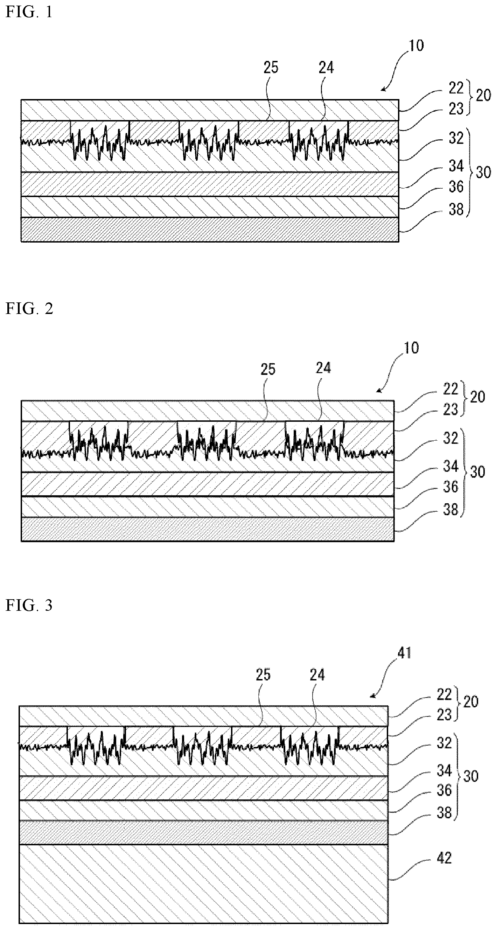

As shown in the schematic diagrams of FIGS. 1 and 2, a transfer sheet 10 of the present disclosure has a transfer layer 30 on a release sheet 20. The release sheet 20 comprises a release layer 23 and a substrate 22 in order from the transfer layer 30 side. The release layer 23 comprises an uneven portion 24 and a flat portion 25. The uneven portion 24 has a plurality of protrusions on the transfer layer 30 side. On the other hand, the flat portion 25 has a surface on the transfer layer 30 side that is relatively flatter than the uneven portion 24. In a plan view of the transfer sheet 10 of the present disclosure from the release sheet 20 side, the uneven portion 24 and the flat portion 25 are preferably alternately formed, and the uneven portion 24 and the flat portion 25 are preferably alternately formed to form a pattern. The pattern profile formed by the uneven portion 24 and the flat portion 25 will be described later (for example, a wood-grain vessel pattern).

In the transfer sheet 10 of the present disclosure, the plurality of protrusions of the uneven portion 24 of the release layer 23 are in contact with the transfer layer 30. In each of the schematic diagrams of FIGS. 1 and 2, the plurality of protrusions of the uneven portion 24 of the release layer 23 are in contact with a protective layer 32 of the transfer layer 30. A surface of the transfer layer 30 on the release sheet 20 side is in contact with the uneven portion 24 and the flat portion 25 of the release layer 23, and gaps (depressions) in the uneven profile of the uneven portion 24 are filled with an outermost layer (the protective layer 32 in FIGS. 1 and 2) of the transfer layer 30 on the release sheet 20 side.

In FIG. 1, the depressions in the uneven portion 24 are not impregnated with a resin composition for forming the flat portion 25. That is, when forming the uneven portion 24 and the flat portion 25, the resin composition for forming the flat portion 25 is applied to a position different from that for forming the uneven portion 24. On the other hand, in FIG. 2, a portion of the depressions of the uneven portion 24 contain the resin composition for forming the flat portion 25. That is, when forming the flat portion 25, the resin composition for forming the flat portion 25 is applied over the uneven portion 24 and is partially impregnated into the depressions of the uneven portion 24.

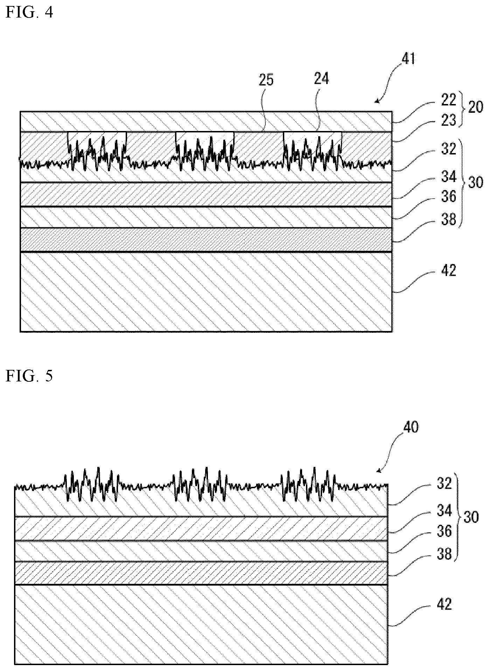

In FIGS. 1 and 2, the surface of the transfer layer 30 in contact with the uneven portion 24 has an uneven profile as a result of being in contact with the uneven portion 24. Furthermore, tips of the plurality of protrusions included in the uneven profile of the transfer layer 30 are positioned closer to the substrate 22 than the surface of the transfer layer 30 in contact with the flat portion 25. Therefore, when the release sheet 20 is peeled off from the transfer layer 30, the protrusions of the uneven profile on the surface of the transfer layer 30 protrude above the portion where the flat portion was positioned (see FIG. 5). This is particularly preferable because the uneven profile is more readily visible when observed from various angles.

In FIGS. 1 and 2, the transfer layer 30 comprises, in order from the release sheet 20 side, the protective layer 32, a primer layer 34, a print layer 36, and an adhesive layer 38. In the transfer sheet 10 of the present disclosure, the transfer layer 30 preferably includes the protective layer 32, and may optionally include the primer layer 34, the print layer 36, and the adhesive layer 38.

### <Substrate 22>

In the present disclosure, the substrate serves as a transferring substrate for transferring the transfer layer to an adherend. A decorative molded article with a transferring substrate (for example, see FIGS. 3 and 4) is obtained by transferring the transfer sheet of the present disclosure (for example, see FIGS. 1 and 2) to an adherend. Furthermore, a decorative molded article is obtained by peeling off the release sheet including the substrate and the release layer from the decorative molded article with a transferring substrate.

The substrate may be in the form of a sheet or a film. Examples of the substrate include plastic films composed of resins including polyolefin resins such as polyethylene and polypropylene; vinyl resins such as polyvinyl chloride, polyvinylidene chloride, polyvinyl alcohol, ethylene/vinyl acetate copolymer, and ethylene/vinyl alcohol copolymer; polyester resins such as polyethylene terephthalate, polyethylene naphthalate, and polybutylene terephthalate; acrylic resins such as polymethyl (meth)acrylate and polyethyl (meth)acrylate; styrene resins such as polystyrene; and polyamide resins represented by nylon 6 or nylon 66. Of these plastic films, a biaxially stretched polyester film having excellent heat resistance and dimensional stability is preferred.

The substrate has a thickness of preferably 12 to 150 µm, more preferably 25 to 100 µm. To enhance the adhesion to the release layer, the surface of the substrate may be previously subjected to a physical treatment such as corona discharge treatment or oxidation treatment, or may be previously coated with an anchor agent or a coating material called a primer.

An antistatic layer may also be provided on the side of the substrate opposite to the release layer side. The antistatic layer can prevent charging of the transfer sheet, thereby preventing the adhesion of foreign matter and the like. This results in improved transfer workability. The antistatic layer may be in contact with the substrate. Alternatively, an anti-blocking layer or a primer layer, for example, may be provided between the antistatic layer and the substrate.

### <Release Layer 23>

The release layer comprises the uneven portion and the flat portion. The uneven portion has a plurality of protrusions on the transfer layer side. A surface of the uneven portion on the substrate side is flat. On the other hand, a surface of the flat portion on the transfer layer side is relatively flatter than the uneven portion. A surface of the flat portion on the substrate side is flat. Each of the uneven portion and the flat portion of the release layer will be hereinafter described.

### (Uneven Portion 24)

The uneven portion is provided only partially on one surface of the substrate. This partial formation of the uneven portion can impart an uneven profile corresponding to the uneven profile of the uneven portion to the surface of the transfer layer (the interface between the transfer layer and the release layer). By using the transfer sheet of the present disclosure, it is possible to produce a decorative molded article with a design of a pattern having a gloss difference within the surface of the protective layer.

The uneven portion 24 of the release layer 23 may be in contact with the surface of the substrate, or another layer such as a primer layer or an easy-adhesion layer (for example, a layer for enhancing the intimate adhesion between the substrate and the release layer 23) may be provided between the substrate and the uneven portion 24, and the uneven portion 24 may be in contact with a surface of the other layer. Similarly, the below-described flat portion 25 of the release layer 23 may be in contact with the surface of the substrate, or another layer such as a primer layer or an easy-adhesion layer (for example, a layer for enhancing the intimate adhesion between the substrate and the release layer 23) may be provided between the substrate and the flat portion 25, and the flat portion 25 may be in contact with a surface of the other layer. The uneven portion 24 of the release layer 23 is preferably in contact with the surface of the substrate. The flat portion 25 of the release layer 23 is also preferably in contact with the surface of the substrate.

Desirably, the surfaces of the uneven portion 24 and the flat portion 25 of the release layer 23 on the substrate side are formed so as to be in contact with the surface of the same layer. Specifically, the uneven portion 24 and the flat portion 25 are preferably formed so as to be in contact with the surface of the substrate or the surface of the above-mentioned other layer (the layer between the substrate and the release layer 23), and more preferably formed so as to be in contact with the surface of the substrate.

As described above, in the transfer sheet of the present disclosure, the plurality of protrusions of the uneven portion of the release layer are in contact with the transfer layer. In each of the schematic diagrams of FIGS. 1 and 2, the plurality of protrusions of the uneven portion 24 of the release layer 23 are in contact with the protective layer 32 of the transfer layer 30. The surface of the transfer layer 30 on the release sheet 20 side is in contact with the uneven portion 24 and the flat portion 25 of the release layer 23, and gaps (depressions) in the uneven profile of the uneven portion 24 are filled with the surface layer (the protective layer 32 in FIGS. 1 and 2) of the transfer layer 30 on the release sheet 20 side.

In the present disclosure, the uneven portion contains a binder resin and a matting agent. The binder resin preferably contains a thermoplastic resin. When a thermosetting resin is used to form the uneven portion, usually, the uneven portion is cured and then the below-described flat portion is formed, which results in poor adhesion between the uneven portion and the flat portion. Therefore, when the transfer sheet of the present disclosure is transferred to an adherend, peeling may occur between the uneven portion and the flat portion, and the release layer is likely to remain on the decorative molded article. In addition, the profile of the uneven portion may be disrupted due to shrinkage on curing, and the design decorativeness of the matte portion tends to be poor when formed into a decorative molded article. Furthermore, when the flat portion is formed on the uneven portion without completely curing the thermosetting resin during the formation of the uneven portion, there is a possibility that the uneven portion will be swollen due to the solvent contained in the coating liquid for forming the flat portion, depending on the degree of curing. This may result in poor design decorativeness of the matte portion when formed into a decorative molded article. In the present disclosure, the uneven portion is formed using a thermoplastic resin as a main component of the binder resin, such that the intimate adhesion between the flat portion and the uneven portion can be improved. As a result, during transfer using the transfer sheet of the present disclosure, a difference in peel strength between the flat portion and the transfer layer (protective layer) is less likely to occur, resulting in good peelability. In addition, when a thermoplastic resin is used, the thermoplastic resin is not affected by shrinkage on curing or swelling due to the solvent, such that a smooth uneven profile is achieved, also resulting in a good appearance when formed into a decorative molded article. In the present disclosure, the binder resin preferably substantially consists of a thermoplastic resin.

In the present disclosure, when the main component of the binder resin is a thermoplastic resin, the term "main component" is intended to mean that the proportion of the thermoplastic resin in the binder resin is 50% or more, preferably 60% or more, more preferably 80% or more, still more preferably 90% or more, and even more preferably 95% or more, and the term "substantially" is intended to mean that the proportion of the thermoplastic resin in the binder resin is 95% or more, preferably 98% or more, and still more preferably 100%.

In the present disclosure, the uneven portion is preferably formed of a binder resin and a matting agent as main components, and preferably substantially consists of a binder resin and a matting agent. In this case, the term "main components" is intended to mean that the proportion of the binder resin and the matting agent in the uneven portion is 50% or more, preferably 60% or more, more preferably 80% or more, still more preferably 90% or more, and even more preferably 95% or more, and the term "substantially" is intended to mean that the proportion of the binder resin and the matting agent in the uneven portion is 95% or more, preferably 98% or more, and more preferably 100%.

From the viewpoint of more satisfactorily achieving the effect of the present disclosure, the uneven portion has an average height of preferably about 0.1 µm or more, more preferably about 0.5 µm or more, still more preferably about 1.0 µm or more, while the uneven portion has an average height of preferably about 8 µm or less, more preferably about 6 µm or less, still more preferably about 4 µm or less. Preferred ranges include from about 0.1 to 8 µm and from about 0.5 to 6 µm. The method for measuring the average height is as described in the "Structural Analysis of Release Layer" section below, and is specifically the method as described in the Examples.

From the viewpoint of more satisfactorily achieving the effect of the present disclosure, the uneven portion has an average peak height of preferably about 1.5 µm or more, more preferably about 2.0 µm or more, still more preferably about 2.5 µm or more, while the uneven portion has an average peak height of preferably about 10 µm or less, more preferably about 8 µm or less, still more preferably about 6 µm or less. Preferred ranges include from about 1.5 to 10 µm and from about 2 to 8 µm. The average peak height of the uneven portion is intended to mean the average value of the heights of the highest 10% of protrusions, among the heights of the protrusions included in the uneven portion (based on the position of the surface of the substrate on the transfer layer side as the reference). For example, when 50 protrusions are included in the uneven portion, the average peak height of the uneven portion is the average value of the heights of the highest five protrusions. The method for measuring the average peak height is as described in the "Structural Analysis of Release Layer" section below, and is specifically the method as described in the Examples.

From the viewpoint of more satisfactorily achieving the effect of the present disclosure, the variation (%) in the height of the uneven portion (variation variable = standard deviation/mean) is preferably about 32 to 80%, more preferably about 35 to 75%, and still more preferably about 40 to 65%. The method for measuring the variation (%) in the peak height is as described in the "Structural Analysis of Release Layer" section below, and is specifically the method as described in the Examples.

### <Structural Analysis of Release Layer>

For structural analysis of the uneven portion of the release layer, a sheet having the uneven portion printed on the substrate but not yet having the flat portion printed is used for the analysis, if such a sheet is available. A commercially available profile analysis laser microscope (for example, VK-X1000 manufactured by Keyence Corporation) is used. Any 100 µm width of the uneven portion is used as a measurement area, and measurements are taken at a total of three such measurement areas. Here, the surface of the substrate on which the release layer is formed is defined as the zero point of height. On the other hand, when the sheet as mentioned above is not available, an alternative method of structural analysis is to observe a cross section of a sample prepared by polishing a cross section of the transfer sheet, using a commercially available scanning electron microscope (for example, FlexSEM1000II manufactured by Hitachi High-Tech Corporation), and measurement of the height of the uneven portion in an area with a width of 50 µm is repeated six times. This structural analysis by observing a cross section requires more time.

The area ratio of the uneven portion within the substrate surface may be selected according to the pattern profile to be formed by the uneven portion and the flat portion, but is preferably 1% or more, more preferably 5% or more, still more preferably 10% or more, even more preferably 12% or more, and still more preferably 15% or more. On the other hand, the area ratio is preferably 99% or less, more preferably 95% or less, still more preferably 90% or less, even more preferably 88% or less, and still more preferably 85% or less.

Examples of thermoplastic resins include polyolefin resins such as polypropylene and polyethylene, polyester resins, polycarbonate resins, acrylonitrile-butadiene-styrene resins (hereinafter, also referred to as "ABS resins"), acrylic resins, vinyl chloride resins, and cellulose resins. In the present disclosure, the above-listed resins may be used alone or in combinations of two or more. Of these, an acrylic resin and a cellulose resin are preferred from the viewpoint of dispersibility of the matting agent and intimate adhesion to the flat portion. In addition, even when ionizing radiation is used for the formation of the protective layer or the like as described below, an acrylic resin and a cellulose resin have stability against ionizing radiation and thus, can be suitably used. Examples of acrylic resins include, but are not specifically limited to, a homopolymer of a (meth)acrylic acid ester, a copolymer of two or more different (meth)acrylic acid ester monomers, and a copolymer of a (meth)acrylic acid ester with another monomer. More specifically, examples of (meth)acrylic resins include (meth)acrylic acid esters, such as polymethyl (meth)acrylate, polyethyl (meth)acrylate, polypropyl (meth)acrylate, polybutyl (meth)acrylate, methyl (meth)acrylate-butyl (meth)acrylate copolymer, ethyl (meth)acrylate-butyl (meth)acrylate copolymer, ethylene-methyl (meth)acrylate copolymer, and styrene-methyl (meth)acrylate copolymer. Examples of cellulose resins include nitrocellulose resins.

The thermoplastic resin has a weight average molecular weight of preferably 10,000 or more and 200,000 or less, more preferably 30,000 or more and 150,000 or less. When the molecular weight is in the above-mentioned range, the coating liquid for forming the uneven portion can be easily prepared, and the uneven portion can have good profile stability. The term "weight average molecular weight" as used herein is intended to mean the weight average molecular weight in terms of polystyrene as measured by gel permeation chromatography (GPC).

The matting agent contained in the uneven portion preferably has an average particle diameter of 0.5 µm or more. When the average particle diameter of the matting agent is 0.5 µm or more, the uneven profile due to the uneven portion can be easily formed on the protective layer. In order to impart an uneven profile with a sufficient size to the protective layer, the average particle diameter of the matting agent is preferably 1.0 µm or more, more preferably 2.0 µm or more, and still more preferably 3.0 µm or more. In addition, in view of the ease of forming the uneven portion, and the visibility of the print layer on the region with the uneven profile due to the uneven portion when formed into a decorative molded article, the average particle diameter of the matting agent is preferably 20 µm or less, more preferably 15 µm or less, and still more preferably 10 µm or less.

The ratio of the average particle diameter of the matting agent to the average height of the uneven portion is preferably 1 or more, more preferably 1.2 or more, and still more preferably 1.4 or more. When the ratio satisfies the above-mentioned values, a sufficient matte effect can be imparted to the decorative molded article. On the other hand, when the uneven portion is thin relative to the average particle diameter of the matting agent, the matting agent may fall out of the uneven portion. Therefore, in view of retainability of the matting agent, the ratio is preferably 10 or less, more preferably 8 or less, and still more preferably 6 or less. As used herein, the average particle diameter is the average value of particle diameters (arithmetic mean diameter) measured for 100 randomly selected, non-aggregated particles, by observing a cross section of the layer in the thickness direction with a scanning electron microscope (SEM) under conditions with an acceleration voltage of 3.0 kV and a magnification of 50,000 times.

The matting agent may be inorganic or organic particles. Examples of inorganic particles include silica, alumina, clay, talc, diatomaceous earth, zeolite, calcium carbonate, barium sulfate, zinc oxide, titanium oxide, and glass beads. Examples of organic particles include various synthetic resin particles, such as melamine resins, benzoguanamine resins, benzoguanamine/melamine/formalin condensation products, acrylic resins, urethane resins, and styrene resins. These particles may be used alone or as a mixture of two or more. The particles may be spherical or irregular in shape. In particular, silica particles are preferred because they achieve a good matte feeling on the surface of the decorative molded article, and have the advantage of low production cost.

From the viewpoint of more satisfactorily achieving the effect of the present disclosure, the matting agent has an oil absorption value of preferably 150 ml/100 g or more, more preferably 200 ml/100 g or more, still more preferably 250 ml/100 g or more. The upper limit is, for example, 450 ml/100 g or less. Preferred ranges include from 150 to 450 ml/100 g and from 200 to 350 ml/100 g. When the oil absorption value of the matting agent contained in the uneven portion is 150 ml/100 g or more, the resin composition is easily absorbed into the uneven portion (particularly into fine depressions), and the uneven profile of the uneven portion can be suitably prevented from being flattened, for example, in the case where the resin composition for forming the flat portion is formed over the uneven portion (see FIG. 2).

The oil absorption value of the matting agent is the value as measured in accordance with the provisions of JIS K 5101-13-2, Part 13: Oil absorption - Section 2: Boiled linseed oil method.

The content of the matting agent is preferably 50 parts by mass or more and 180 parts by mass or less (solids content), per 100 parts by mass (solids content) of the binder resin. When the content is 50 parts by mass or more, a fine uneven profile can be appropriately formed on the surface of the uneven portion and on the surface of the flat portion over the uneven portion. As a result, a desired matte design can be imparted to the decorative molded article. When an uneven portion containing a thermosetting resin and a matting agent is formed, because of low flexibility of the layer, the uneven portion may be cracked during the production process of a decorative molded article to have a disrupted shape, resulting in poor design decorativeness of the matte portion when formed into a decorative molded article. Under such circumstances, when a thermosetting resin is used, the matting agent cannot be added in large amounts. In the present disclosure, it is believed that because the uneven portion is formed using a thermoplastic resin, the uneven portion has flexibility even though the matting agent is incorporated in the amount as described above, and the profile of the uneven portion is retained during the production process of the decorative molded article. In view of formability of the uneven profile, the content of the matting agent is more preferably 75 parts by mass or more, and still more preferably 90 parts by mass or more, per 100 parts by mass (solids content) of the binder resin. When the content is 180 parts by mass or less, a decrease in the film strength of the uneven portion can be prevented, and the uneven profile can be maintained in the production process of the transfer sheet and the production process of the decorative molded article. In addition, when peeling off the release sheet, a substantially uniform peel strength can be achieved, which can prevent a transfer failure. Furthermore, good visibility of the print layer is achieved when formed into a decorative molded article. The content of the matting agent is more preferably 160 parts by mass or less, and still more preferably 140 parts by mass or less.

From the viewpoint of reducing the adhesion strength between the uneven portion and the surface of the transfer layer to enhance the peelability, the uneven portion preferably contains an additive for enhancing the peelability, such as silicone or fluorine. The additive content is preferably 0.3 parts by mass or more, and more preferably 0.5 parts by mass or more, while the additive content is preferably 5 parts by mass or less, and more preferably 3 parts by mass or less, per 100 parts by mass (solids content) of the binder resin. Preferred ranges include from about 0.3 to 5 parts by mass and from about 0.5 to 3 parts by mass. As described above, in the case where the resin composition for forming the flat portion is formed over the uneven portion, the resin composition for forming the flat portion is present in the depressions of the uneven portion. This has the advantage of reducing the adhesion between the uneven portion and the transfer layer to enhance the peelability. Therefore, in this case, there is only a small advantage to incorporating the additive for enhancing the peelability into the uneven portion.

The formation pattern of the uneven portion is preferably selected appropriately according to the pattern of the below-described print layer. Examples of the pattern include wood-grain (wood-grain vessel), stone-grain, fabric-grain, sand-grain, circle, square, polygon, geometric pattern, and characters.

The uneven portion is formed as follows. First, a coating liquid for forming the uneven portion is prepared by adding an appropriate solvent to a thermoplastic resin used as a binder resin and a matting agent, optionally with an additive. The coating liquid is applied onto the substrate using a known means, such as gravure printing or screen printing, and dried to partially form the uneven portion.

### (Flat Portion 25)

The flat portion is partially provided on the substrate. That is, a region with the flat portion and a region with the uneven portion are present on the substrate. Furthermore, the depressions of the uneven portion may be impregnated with the resin composition for forming the flat portion. For example, when the uneven portion is partially formed on one surface of the substrate and then the resin composition for forming the flat portion is applied over the entire surface of the substrate (including the uneven portion), dried, and cured, the flat portion is formed on a portion of the substrate where the uneven portion is not formed, and the resin composition impregnates into the depressions of the uneven portion, such that a portion of the depressions are filled with the resin composition for forming the flat portion.

The flat portion has a surface on the transfer layer side that is relatively flatter than the uneven portion. For example, the flat portion has an average peak height of preferably about 4 µm or less, more preferably about 3 µm or less, still more preferably about 2 µm or less. For the method for measuring the average height, reference may be made to the method as described in the "Structural Analysis of Release Layer" section above, and specifically to the method as described in the Examples.

The pattern of the uneven portion can be maintained by placing the flat portion between the uneven portions formed in a pattern.

As described above, in the transfer sheet of the present disclosure, the protrusions of the uneven portion are in contact with the surface of the transfer layer, and the flat portion is also in contact with the surface of the transfer layer.

The resin component of the flat portion is not specifically limited as long as it is a material having low adhesion strength to the surface of the transfer layer (for example, the protective layer) and allowing the transfer layer to be easily peeled off from the substrate. The composition of the resin component for forming the flat portion is preferably different from the composition of the resin component for forming the uneven portion. Examples of the resin component for forming the flat portion include a cured product of a thermosetting resin composition and a cured product of an ionizing radiation curable resin composition. Specific examples include fluororesins, silicone resins, acrylic resins, polyester resins, polycarbonate resins, polyolefin resins, polystyrene resins, polyurethane resins, and vinyl chloride-vinyl acetate copolymer resins. Of these resin components, the cured product of an ionizing radiation curable resin composition is preferred because it has high strength, and can be cured instantaneously to impart an accurate and precise profile. A cured product of an electron beam curable resin composition is more preferred.

The ionizing radiation curable resin is a resin that is crosslinked and cured by irradiation with ionizing radiation, and has an ionizing radiation curable functional group. The ionizing radiation curable functional group is a group that is crosslinked and cured by irradiation with ionizing radiation, and preferred examples include functional groups having an ethylenic double bond, such as (meth)acryloyl, vinyl, and allyl groups. "Ionizing radiation" is intended to mean an electromagnetic wave or a charged particle beam having an energy quantum capable of polymerizing or crosslinking molecules. Typically, ultraviolet rays (UV) or electron beams (EB) are used as the ionizing radiation, but the ionizing radiation also includes electromagnetic waves such as X-rays and γ-rays and charged particle beams such as α-rays and ion beams. Of these, a cured product of an electron beam curable resin composition is more preferred. Specifically, an ionizing radiation curable resin can be appropriately selected from polymerizable monomers and polymerizable oligomers conventionally used as ionizing radiation curable resins.

A preferred polymerizable monomer is a (meth)acrylate-based monomer having a radically polymerizable unsaturated group in the molecule, and a polyfunctional (meth)acrylate monomer is preferred. Examples of polyfunctional (meth)acrylate monomers include a (meth)acrylate monomer having two or more ionizing radiation curable functional groups in the molecule and having at least a (meth)acryloyl group as the functional group. From the viewpoint of heat resistance and moldability, the number of functional groups is preferably 2 or more and 8 or less, more preferably 2 or more and 6 or less, still more preferably 2 or more and 4 or less, and particularly preferably 2 or more and 3 or less. These polyfunctional (meta)acrylate monomers may be used alone or in combinations of two or more. Alternatively, a composition prepared by mixing one or more of these polyfunctional (meth)acrylate monomers with one or more of the below-described polymerizable oligomers may be used. By thus preparing the composition by mixing both monomers, it is possible to adjust, for example, the crosslink density and the molecular weight between crosslinks of the cured product, and adjust various physical properties of the cured product.

Examples of polymerizable oligomers include a (meth)acrylate oligomer having two or more ionizing radiation curable functional groups in the molecule and having at least a (meth)acryloyl group as the functional group. Examples include a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acryl (meth)acrylate oligomer. From the viewpoint of heat resistance and moldability, the number of functional groups in these polymerizable oligomers is preferably 2 or more and 8 or less, and the upper limit is more preferably 6 or less, still more preferably 4 or less, and particularly preferably 3 or less.

In particular, in view of intimate adhesion to the uneven portion, the resin component is preferably an acryl (meth)acrylate-based compound or a urethane (meth)acrylate-based compound. As used herein, the term "(meth)acrylate" is intended to mean "acrylate or methacrylate". The resin component may be any of the acryl (meth)acrylate-based compound and the urethane (meth)acrylate-based compound, or may be a mixture thereof. The acryl (meth)acrylate-based compound and the urethane (meth)acrylate-based compound may each be a monomer, an oligomer, or a mixture of a monomer and an oligomer.

From the viewpoint of heat resistance and moldability, the monomer and the oligomer to be used in the flat portion have a weight average molecular weight of preferably 250 or more and 30,000 or less, more preferably 250 or more and 20,000 or less, still more preferably 250 or more and 15,000 or less. The term "weight average molecular weight" as used herein is the average molecular weight in terms of standard polystyrene as measured by GPC analysis.

In the present disclosure, the flat portion is preferably formed of a cured product of a thermosetting resin composition or a cured product of an ionizing radiation curable resin composition as a main component, and preferably substantially consists of a cured product of a thermosetting resin composition or a cured product of an ionizing radiation curable resin composition. In this case, the term "main component" is intended to mean that the proportion of the cured product of a thermosetting resin composition or the cured product of an ionizing radiation curable resin composition in the flat portion is 50% or more, preferably 60% or more, more preferably 80% or more, still more preferably 90% or more, and even more preferably 95% or more, and the term "substantially" is intended to mean that the proportion of the cured product of a thermosetting resin composition or the cured product of an ionizing radiation curable resin composition in the flat portion is 95% or more, preferably 98% or more, and more preferably 100%.

The resin composition for forming the flat portion may optionally be blended with additives such as a curing agent and a polymerization initiator.

From the viewpoint of satisfactorily achieving the effect of the present disclosure, the uneven portion and the flat portion may contain a common binder resin. However, as described above, the composition of the resin component for forming the flat portion is preferably different from the composition of the resin component for forming the uneven portion. The type of the binder resin (thermoplastic resin) is as described for the uneven portion.

The flat portion may contain a release agent to improve the releasability from the protective layer. Examples of the release agent include silicones, as well as waxes such as synthetic waxes and natural waxes. Examples of synthetic waxes include polyolefin waxes, such as a polyethylene wax and a polypropylene wax. In addition, from the viewpoint of improvement in the hardness of the flat portion, prevention of bleeding of the release agent, and dispersibility of the particles, a crosslinkable and curable release component such as a reactive silicone is preferably used as the release agent. The mass ratio of the release agent to the total solids content in the flat portion is preferably 0.3 to 10% by mass, and more preferably 0.5 to 5% by mass.

From the viewpoint of printability of the protective layer, the flat portion preferably has a thickness that is not significantly different from an average thickness of an adjacent uneven layer. Specifically, the difference between the thickness of the flat portion and the average thickness of the uneven layer is preferably 10 µm or less, more preferably 8 µm or less, and still more preferably 5 µm or less. The thickness of the flat portion is preferably 5 to 650%, more preferably 10 to 450%, and still more preferably 15 to 200%, of the average height of the uneven portion.

The flat portion may further contain a matting agent. This allows the resulting decorative molded article to have a matte feeling as a whole while also having a clear gloss difference for each region. The matting agent to be used may be the same as used for the uneven portion. In particular, from a cost perspective, silica particles are preferably used.

When the flat portion contains a matting agent, the amount of the matting agent added is preferably smaller than the amount added in the uneven portion. Specifically, the matting agent is added in an amount of preferably 0.1 parts by mass or more and 10 parts by mass or less (solids content), and more preferably 1.0 parts by mass or more and 5 parts by mass or less, per 100 parts by mass (solids content) of the resin component of the flat portion. When the matting agent is added in the above-mentioned range of amounts, a desired matte design can be imparted to the decorative molded article.

The matting agent contained in the flat portion has an average particle diameter of preferably 0.5 µm or more, more preferably 0.7 µm or more. When the average particle diameter of the matting agent is 0.5 µm or more, the uneven profile due to the flat portion is easily formed on the protective layer. The average particle diameter of the matting agent contained in the flat portion is preferably 10 µm or less, and more preferably 5 µm or less, in view of, for example, visibility of the print layer when formed into a decorative molded article. Furthermore, the larger the gloss difference between the uneven portion and the flat portion, the better the visibility of the uneven portion; therefore, the average particle diameter of the matting agent contained in the flat portion is preferably smaller than the average particle diameter of the matting agent contained in the uneven portion by 0.2 µm or more, more preferably by 0.5 µm or more.

The ratio of the average particle diameter of the matting agent to the thickness of the flat portion is preferably 1 or more, more preferably 1.2 or more, and still more preferably 1.4 or more. When the ratio satisfies the above-mentioned values, a sufficient matte effect can be imparted to the decorative molded article. On the other hand, when the flat portion is thin relative to the average particle diameter of the matting agent, the matting agent may fall out of the uneven portion. Therefore, in view of retainability of the matting agent, the ratio is preferably 10 or less, more preferably 8 or less, and still more preferably 6 or less. In order to create a design having a gloss difference between the area corresponding to the uneven portion and its surrounding area (the area where the uneven portion is not provided) when formed into a decorative molded article, it is preferred that the matting agents contained in the uneven layer and the flat portion are different from each other in terms of the average particle diameter, the amount added, and the ratio of the average particle diameter of the matting agent to the thickness of the layer. In a more preferred embodiment, the uneven portion exhibits a more matte design than that of the flat portion.

The flat portion can be formed using a known printing method, such as gravure printing, offset printing, letterpress printing, or silk screen printing.

### [Transfer Layer]

### <Protective Layer>

The protective layer is provided on the release sheet side of the transfer layer. In the surface profile of the protective layer on the release sheet side, the region formed on the uneven portion has a profile corresponding to the uneven profile of the uneven portion. On the other hand, when the protective layer is in contact with the flat portion, the region of the protective layer formed on the flat portion has a profile corresponding to the surface profile of the flat portion.

The protective layer preferably contains a cured product of a curable resin composition. Examples of the cured product of a curable resin composition include a cured product of a thermosetting resin composition, a cured product of an ionizing radiation curable resin composition, and a cured product of a mixture thereof. Of these, the cured product of an ionizing radiation curable resin composition is preferred from the viewpoint of abrasion resistance of the protective layer. In addition, of cured products of ionizing radiation curable resin compositions, a cured product of an electron beam curable resin composition is preferred, from the viewpoint of easily completing the crosslinking and curing at the time when the protective layer is formed.

The thermosetting resin composition is a composition containing at least a thermosetting resin and is a resin composition that is cured by heating. Examples of thermosetting resins include acrylic resins, urethane resins, phenol resins, urea melamine resins, epoxy resins, unsaturated polyester resins, and silicone resins. The thermosetting resin composition optionally contains a curing agent in addition to such a curable resin.

Specifically, an ionizing radiation curable resin can be appropriately selected from polymerizable monomers and polymerizable oligomers conventionally used as ionizing radiation curable resins.

A preferred polymerizable monomer is a (meth)acrylate-based monomer having a radically polymerizable unsaturated group in the molecule, and a polyfunctional (meth)acrylate monomer is preferred. Examples of polyfunctional (meth)acrylate monomers include a (meth)acrylate monomer having two or more ionizing radiation curable functional groups in the molecule and having at least a (meth)acryloyl group as the functional group, and an acrylate monomer having an acryloyl group is preferred. These polymerizable oligomers may be used alone or in combinations of two or more. The number of functional groups in the polymerizable monomer is preferably 2 or more and 8 or less, more preferably 2 or more and 6 or less, still more preferably 2 or more and 4 or less, and particularly preferably 2 or more and 3 or less.

Examples of polymerizable oligomers include a (meth)acrylate oligomer having two or more ionizing radiation curable functional groups in the molecule and having at least a (meth)acryloyl group as the functional group. Examples include a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acryl (meth)acrylate oligomer.

These polymerizable oligomers may be used alone or in combinations of two or more. Of these polymerizable oligomers, the polycarbonate (meth)acrylate oligomer is preferred. The polycarbonate (meth)acrylate oligomer is not specifically limited as long as it has a carbonate bond on the main chain and has a (meth)acrylate group on an end or a side chain, and may be a polycarbonate-based urethane (meth)acrylate oligomer, which is a urethane (meth)acrylate oligomer having a polycarbonate skeleton. From the viewpoint of heat resistance and moldability, the number of functional groups in these polymerizable oligomers is preferably 2 or more and 8 or less, and the upper limit is more preferably 6 or less, still more preferably 4 or less, and particularly preferably 3 or less.

In the ionizing radiation curable resin, a monofunctional (meth)acrylate may be appropriately used in combination with the polyfunctional (meth)acrylate or the like, for the purpose of, for example, reducing the viscosity. Such monofunctional (meth)acrylates may be used alone or in combinations of two or more.

From the viewpoint of heat resistance and moldability, the monomer and the oligomer to be used in the protective layer have a weight average molecular weight of preferably 250 or more and 30,000 or less, more preferably 250 or more and 20,000 or less, still more preferably 250 or more and 15,000 or less.

The protective layer is preferably substantially free of particles such as organic and inorganic particles. When the protective layer is free of particles, the pattern of the print layer present as a lower layer is readily visible. The phrase "the protective layer is substantially free of particles" is intended to mean that the content of particles is 1% by mass or less, preferably 0.1% by mass or less, more preferably 0.01% by mass or less, and still more preferably 0% by mass, based on the total solids content of the protective layer.

The protective layer may further contain a thermoplastic resin as a resin component other than the cured product of a curable resin composition. The inclusion of a thermoplastic resin in the protective layer can prevent cracking during molding to achieve good moldability. The thermoplastic resin may be a general-purpose resin, such as an acrylic resin, a polyester resin, or a urethane resin. The content of the thermoplastic resin is preferably 0.1 to 20% by mass, more preferably 0.5 to 10% by mass, and still more preferably 1 to 5% by mass, based on the total solids content of the protective layer.

From the viewpoint of the balance between surface hardness and moldability, the protective layer has a thickness of preferably 0.5 to 30 µm, more preferably 1 to 20 µm, still more preferably 1 to 10 µm.

The protective layer can be formed using a known printing method, such as gravure printing, offset printing, letterpress printing, or silk screen printing.

The thermosetting resin composition and/or the ionizing radiation curable resin composition may be completely cured at the time when the protective layer is formed. However, from the viewpoint of moldability, the thermosetting resin composition and/or the ionizing radiation curable resin composition may be in an uncured or semicured state at the time when the protective layer is formed; then, after transfer to an adherend, the curing of the thermosetting resin composition and/or the ionizing radiation curable resin composition may be allowed to proceed to completely cure the composition.

### <Print Layer>

The print layer is a layer for imparting desired design decorativeness to the decorative molded article. The print layer may have any pattern, such as, for example, wood-grain, stone-grain, fabric-grain, sand-grain, circle, square, polygon, geometric pattern, characters, or solid printing.

The print layer preferably contains a binder resin, such as a polyvinyl resin, a polyester resin, an acrylic resin, a polyvinyl acetal resin, or a cellulose resin, and a pigment and/or a dye. The print layer has a thickness of preferably 0.5 to 40 µm, more preferably 1 to 30 µm, from the viewpoint of design decorativeness.

The print layer can be formed using a known printing method, such as gravure printing, offset printing, letterpress printing, or silk screen printing.

### <Adhesive Layer>

The adhesive layer serves to improve the adhesion between the transfer layer and an adherend such as a resin molded body. The adhesive layer may not be provided when the adhesion between the protective layer and the adherend is satisfactory.

A resin having suitable adhesion for the material of the adherend is preferably used as the adhesive layer. For example, when the material of the adherend is an acrylic resin, an acrylic resin is preferably used. When the material of the adherend is a polyphenylene oxide/polystyrene resin, a polycarbonate resin, or a styrene resin, a resin having affinity for these resins, such as an acrylic resin, a polystyrene resin, or a polyamide resin, is preferably used. Furthermore, when the material of the adherend is a polypropylene resin, a chlorinated polyolefin resin, a chlorinated ethylene-vinyl acetate copolymer, cyclized rubber, or a coumarone-indene resin is preferably used. The adhesive layer may contain additives such as an ultraviolet absorber and an infrared absorber. The adhesive layer has a thickness of preferably 0.1 to 10 µm, more preferably 0.5 to 5 µm.

The adhesive layer can be formed using a known printing method, such as gravure printing, offset printing, letterpress printing, or silk screen printing.

### <Primer Layer>

The primer layer is a layer optionally provided to improve the intimate adhesion between the protective layer and the print layer.

The primer layer preferably mainly contains a resin component. The resin component of the primer layer preferably contains a cured product of a curable resin composition, in view of imparting heat resistance when placed in a high-temperature environment such as in-mold molding. Examples of the curable resin composition include a thermosetting resin composition and an ionizing radiation curable resin composition. The thermosetting resin composition and the ionizing radiation curable resin composition of the primer layer may be the same as those exemplified as the thermosetting resin composition and the ionizing radiation curable resin composition of the protective layer. In particular, the primer layer preferably contains a cured product of a thermosetting resin composition. Examples of the thermosetting resin composition include a two-component curable urethane resin containing any of various polyol compounds, such as a polyether polyol, a polyester polyol, and an acrylic polyol, and a curing agent, such as an isocyanate compound.

The primer layer has a thickness of preferably 0.1 to 6 µm, more preferably 0.5 to 5 µm. The primer layer may have a single layer structure, or may also have a structure in which two or more layers are laminated in view of intimate adhesion between the layers.

The primer layer can be formed using a known printing method, such as gravure printing, offset printing, letterpress printing, or silk screen printing.

### [Decorative Molded Article]

A decorative molded article produced using the transfer sheet of the present disclosure will be described with FIGS. 1 to 5. FIG. 3 is a schematic cross-sectional view of a decorative molded article 41 with the transferring substrate shown in FIG. 1, and FIG. 4 is a schematic cross-sectional view of a decorative molded article 41 with the transferring substrate shown in FIG. 2. FIG. 5 is a schematic cross-sectional view of a decorative molded article obtained by peeling off the release sheet 20 from the decorative molded article 41 with the transferring substrate shown in FIG. 3. A decorative molded article 40 includes an adherend 42 and a transfer layer 30 covering the adherend. In FIG. 5, the transfer layer 30 includes an adhesive layer 38, a print layer 36, a primer layer 34, and a protective layer 32 in order from the adherend side. The protective layer 32 is positioned as the outermost layer of the decorative molded article 40.

### <Adherend>

The adherend is a resin molded body made of a resin. The adherend may have a flat shape or a three-dimensional shape having, for example, a curved surface. The adherend may also be colored.

The resin molded body may be formed of a thermoplastic resin or a thermosetting resin. When the decorative molded article is produced by in-mold molding, a thermoplastic resin is preferably used as the resin molded body. Examples of such thermoplastic resins include polystyrene resins, polyolefin resins, ABS resins (including heat-resistant ABS resins), AS resins, PC/ABS resins, PC/AS resins, AN resins, polyphenylene oxide resins, polycarbonate resins, polyacetal resins, acrylic resins, polyethylene terephthalate resins, polybutylene terephthalate resins, polysulfone resins, and polyphenylene sulfide resins.

### <Protective Layer in Decorative Molded Article>

The protective layer in the decorative molded article of the present disclosure has an uneven profile substantially complementary to the surface profile of the release layer of the release sheet. The flat portion of the protective layer preferably has an uneven profile substantially complementary to the flat portion of the release layer of the release sheet. **In** the decorative molded article of the present disclosure, for example, the protrusions of the uneven profile on the surface of the protective layer preferably protrude above the flat portion. This surface structure of the decorative molded article has an uneven profile that is readily visible when observed from various angles.

### [Method for Producing Decorative Molded Article]

A method for producing the decorative molded article of the present disclosure comprises the steps of (1) adhering the transfer layer of the transfer sheet to an adherend to laminate the transfer sheet on the adherend; and (2) peeling off the release sheet of the transfer sheet to transfer the transfer layer onto the adherend.

The transfer sheet of the present disclosure is particularly suitably applied to the production of a decorative molded article by in-mold molding (injection molding simultaneous transfer decorating method). According to the present disclosure, a pattern having a gloss difference can be transferred to the surface of a resin molded body having a complicated surface profile, such as a three-dimensional curved surface.

One embodiment of the method for producing the decorative molded article by in-mold molding includes the following steps:
(S1) placing the transfer layer side of the transfer sheet toward the inside of a mold for in-mold molding;
(S2) injecting a resin for an adherend into the mold for in-mold molding;
(S3) integrating the transfer sheet and the resin to form a laminate in which the transfer sheet is laminated on the surface of a resin molded body (adherend); and
(S4) peeling off the release sheet of the transfer sheet after removing the laminate from the mold or simultaneously with removing the resin molded body from the mold.

### Examples

The present disclosure will be hereinafter described in detail with reference to examples and comparative examples; however, the present disclosure is not limited to the examples.

### [Examples and Comparative Examples]

### <Production of Transfer Sheet>

### (Example 1)

As a substrate of a release sheet, a biaxially stretched polyethylene terephthalate film with a thickness of 75 µm was prepared. In addition, a coating liquid 1 for uneven portion to form an uneven portion of a release layer and a coating liquid for flat portion to form a flat portion of a release layer were prepared. The composition of each coating liquid is as described below. Then, the coating liquid 1 for uneven portion was applied to one surface of the substrate in a pattern (wood-grain vessel pattern) by gravure printing and dried. Then, the coating liquid for flat portion was applied to areas where the coating liquid 1 for uneven portion was not applied, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. Then, the coating liquid for protective layer was applied onto the release layer of the release sheet, and irradiated with an electron beam at 165 KeV and 5 Mrad (50 kGy) to form a protective layer with a thickness of 3 µm. Then, a coating liquid 1 for primer layer was applied onto the protective layer and dried to form a primer layer with a thickness of 2 µm. Then, a brown ink (acrylic resin composition) was applied onto the primer layer by gravure printing and dried to form a wood-grain pattern print layer with a thickness of 6 µm. Then, a coating liquid for adhesive layer prepared by diluting a thermoplastic resin (acrylic resin) with a solvent was applied onto the print layer and dried to form a heat-sealable adhesive layer with a thickness of 2 µm. Through the above-described steps, a transfer sheet of Example 1 was obtained (see FIG. 1).

### (Examples 2 to 5)

Transfer sheets of Examples 2 to 5 were obtained as in Example 1 (see FIG. 1), except that the thickness of the flat portion was set to those as shown in Table 1.

### (Example 6)

As a substrate of a release sheet, a biaxially stretched polyethylene terephthalate film with a thickness of 75 µm was prepared. In addition, a coating liquid 2 for uneven portion to form an uneven portion of a release layer and a coating liquid for flat portion to form a flat portion of a release layer were prepared. The composition of each coating liquid is as described below. Then, the coating liquid 2 for uneven portion was applied to one surface of the substrate in a pattern (wood-grain vessel pattern) by gravure printing and dried. Then, the coating liquid for flat portion was applied to areas where the coating liquid 2 for uneven portion was not applied, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. On the release layer of the resulting release sheet, a protective layer, a primer layer, a print layer, and an adhesive layer were formed in this order as in Example 1 to obtain a transfer sheet of Example 6 (see FIG. 1).

### (Example 7)

As a substrate of a release sheet, a biaxially stretched polyethylene terephthalate film with a thickness of 75 µm was prepared. In addition, a coating liquid 3 for uneven portion to form an uneven portion of a release layer and a coating liquid for flat portion to form a flat portion of a release layer were prepared. The composition of each coating liquid is as described below. Then, the coating liquid 3 for uneven portion was applied to one surface of the substrate in a pattern (wood-grain vessel pattern) by gravure printing and dried to form an uneven portion. Then, the coating liquid for flat portion was applied over the entire surface of the substrate including the uneven portion, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. On the release layer of the resulting release sheet, a protective layer, a primer layer, a print layer, and an adhesive layer were formed in this order as in Example 1 to obtain a transfer sheet of Example 7 (see FIG. 2).

### (Examples 8 and 9)

Transfer sheets of Examples 8 and 9 were obtained as in Example 7 (see FIG. 2), except that the thickness of the flat portion was set to those as shown in Table 1.

### (Examples 10 and 11, and Comparative Example 1)

As a substrate of a release sheet, a biaxially stretched polyethylene terephthalate film with a thickness of 75 µm was prepared. In addition, a coating liquid 4 for uneven portion to form an uneven portion of a release layer and a coating liquid for flat portion to form a flat portion of a release layer were prepared. The composition of each coating liquid is as described below. Then, the coating liquid 4 for uneven portion was applied to one surface of the substrate in a pattern (wood-grain vessel pattern) by gravure printing and dried to form an uneven portion. Then, the coating liquid for flat portion was applied over the entire surface of the substrate including the uneven portion, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. On the release layer of the resulting release sheet, a protective layer, a primer layer, a print layer, and an adhesive layer were formed in this order as in Example 7 to obtain a transfer sheet of each of Examples 10 and 11, and Comparative Example 1 (see FIG. 2).

### (Example 12)

As a substrate of a release sheet, a biaxially stretched polyethylene terephthalate film with a thickness of 75 µm was prepared. In addition, a coating liquid 5 for uneven portion to form an uneven portion of a release layer and a coating liquid for flat portion to form a flat portion of a release layer were prepared. The composition of each coating liquid is as described below. Then, the coating liquid 5 for uneven portion was applied to one surface of the substrate in a pattern (wood-grain vessel pattern) by gravure printing and dried to form an uneven portion. Then, the coating liquid for flat portion was applied over the entire surface of the substrate including the uneven portion, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. On the release layer of the resulting release sheet, a protective layer, a primer layer, a print layer, and an adhesive layer were formed in this order as in Example 7 to obtain a transfer sheet of each of Examples 10 and 11 (see FIG. 2).

### (Comparative Example 2)

As a substrate of a release sheet, a biaxially stretched polyethylene terephthalate film with a thickness of 75 µm was prepared. In addition, a coating liquid 6 for uneven portion to form an uneven portion of a release layer and a coating liquid for flat portion to form a flat portion of a release layer were prepared. The composition of each coating liquid is as described below. Then, the coating liquid 6 for uneven portion was applied to one surface of the substrate in a pattern (wood-grain vessel pattern) by gravure printing and dried to form an uneven portion. Then, the coating liquid for flat portion was applied over the entire surface of the substrate including the uneven portion, and irradiated with an electron beam at 165 KeV and 7 Mrad (70 kGy) to form a release layer on which uneven portions and flat portions were alternately formed to be adjacent to each other, thereby obtaining a release sheet. The average peak height (µm), the average height (µm), and the variation (%) in the peak height (variation variable = standard deviation/mean) of the uneven portion, and the thickness (µm) of the flat portion are as shown in Table 1. On the release layer of the resulting release sheet, a protective layer, a primer layer, a print layer, and an adhesive layer were formed in this order as in Example 7 to obtain a transfer sheet of Comparative Example 2 (see FIG. 2).

### (Coating Liquid for Uneven Portion)

Coating liquids 1 to 6 for uneven portion each having the following formulation were prepared.

Coating liquid 1 for uneven portion:
Nitrocellulose resin (thermoplastic resin, weight average molecular weight: 50,000) 100 parts by mass
Matting agent (irregular shaped silica, average particle diameter 3 µm, oil absorption value 250 ml/100 g) 130 parts by mass
Silicone 2 parts by mass
Solvent (ethyl acetate) q. s.
Coating liquid 2 for uneven portion:
   Nitrocellulose resin (thermoplastic resin, weight average molecular weight: 50,000) 100 parts by mass
   Matting agent (spherical silica, average particle diameter 3 µm, oil absorption value 30 ml/100 g) 130 parts by mass
   Silicone 2 parts by mass
   Solvent (ethyl acetate) q. s.
   Coating liquid 3 for uneven portion:
      Nitrocellulose resin (thermoplastic resin, weight average molecular weight: 50,000) 100 parts by mass
      Matting agent (irregular shaped silica, average particle diameter 3 µm, oil absorption value 250 ml/100 g) 130 parts by mass
      Solvent (ethyl acetate) q. s.
      Coating liquid 4 for uneven portion:
         Nitrocellulose resin (thermoplastic resin, weight average molecular weight: 50,000) 100 parts by mass
         Matting agent (irregular shaped silica, average particle diameter 3 µm, oil absorption value 200 ml/100 g) 130 parts by mass
         Solvent (ethyl acetate) q. s.
         Coating liquid 5 for uneven portion:
            Nitrocellulose resin (thermoplastic resin, weight average molecular weight: 50,000) 100 parts by mass
            Matting agent (irregular shaped silica, average particle diameter 3 µm, oil absorption value 150 ml/100 g) 130 parts by mass
            Solvent (ethyl acetate) q. s.
            Coating liquid 6 for uneven portion:
               Nitrocellulose resin (thermoplastic resin, weight average molecular weight: 50,000) 100 parts by mass
               Matting agent (a mixture of spherical and irregular shaped silica, average particle diameter 3 µm, oil absorption value 100 ml/100 g) 130 parts by mass
               Solvent (ethyl acetate) q. s.

### (Coating Liquid for Flat Portion)

A coating liquid for flat portion with the following formulation was prepared.

### Coating liquid for flat portion:

Bifunctional polycarbonate acrylate (weight average molecular weight: 5,000) 84 parts by mass
Pentaerythritol triacrylate (PETA) 14 parts by mass
Matting agent (irregular shaped silica, average particle diameter 3 µm, oil absorption value 350 ml/100 g) 5 parts by mass
Reactive silicone 2 parts by mass
Solvent (a mixture of methyl ethyl ketone and isopropyl alcohol) q. s.

### (Coating liquid for protective layer)

A coating liquid for protective layer with the following formulation was prepared.
Tetrafunctional urethane acrylate (weight average molecular weight: 10,000) 95 parts by mass
Trifunctional acrylate monomer (weight average molecular weight: 300) 5 parts by mass
Solvent (a mixture of methyl ethyl ketone and isopropyl alcohol) q. s.

### (Coating liquid for primer layer)

A coating liquid for primer layer with the following formulation was prepared.

### <Coating liquid for primer layer>

Acrylic polyol (hydroxyl value: 80 mg KOH/g, Tg: 90°C) 100 parts by mass
XDI (m-xylylene diisocyanate) 10 parts by mass
Solvent (methyl ethyl ketone) q. s.

### <Structural Analysis of Release Layer in Transfer Sheet>

For each of the transfer sheets obtained in the examples and comparative examples, the release layer in the transfer sheet was subjected to structural analysis using the below-described method. Table 1 shows the average peak height (µm), the average height (µm), and the variation (%) in the peak height (variation variable = standard deviation/mean) of the uneven portion, and the thickness (µm) of the flat portion, measured for the release layer.

For cross-sectional structure analysis of the uneven portion of the release layer, the sheet having the uneven portion printed on the substrate but not yet having the flat portion printed was used for the analysis. A profile analysis laser microscope (VK-X1000 manufactured by Keyence Corporation) was used. Any 100 µm width of the uneven portion was used as a measurement area, and measurements were taken at a total of three such measurement areas. Here, the surface of the substrate on which the release layer was formed was defined as the zero point of height. As an alternative method of structural analysis, a cross section of a sample prepared by polishing a cross section of the transfer sheet was observed using a scanning electron microscope (FlexSEM1000II manufactured by Hitachi High-Tech Corporation), and the height of the uneven portion was measured for six areas each having a width of 50 µm. As a result, similar measurement results were obtained. However, this method of cross-sectional structure analysis by observing a cross section requires more time.

### <Production of Resin Molded Article>

Using each of the transfer sheets obtained in the examples and comparative examples, a decorative molded article was produced using the following procedure. Each of the transfer sheets of Examples 1 to 12 and Comparative Examples 1 and 2 was placed on one of a pair of upper and lower molds for in-mold molding. Here, the adhesive layer was placed toward the inside of the mold (the side to be brought in contact with an injection resin). Then, the molds were clamped, and an injection resin (PC-ABS resin) was injected into the molds to obtain a laminate (a plate-shaped body 10 cm × 16 cm × 2 mm in thickness) in which the transfer sheet and an injection resin layer containing the injection resin had been integrated. Then, after the molds were opened, the release sheet (from the substrate to the flat portion) of the transfer sheet was peeled off from the laminate to obtain each of decorative molded articles of Examples 1 to 12 and Comparative Examples 1 and 2.

### <Surface Observation and Evaluation of Design Decorativeness of Decorative Molded Article>

The surface of each of the decorative molded articles obtained in the examples and comparative examples was observed using the below-described method, to check whether the protrusions of the uneven profile on the surface were positioned higher than the flat portion (evaluated as "OK" when positioned higher and as "NG" when not), and to evaluate the visibility (design decorativeness) of the uneven profile on the surface from various angles. The results are shown in Table 1.

Each of the decorative molded articles produced in the examples and comparative examples was visually observed from an angle of 60 ± 10 degrees, to evaluate the visibility according to the following criteria, based on the presence or absence of a gloss difference between the region with the uneven portion and the region with the flat portion. Twenty subjects made the evaluation, and the average score was calculated.

### (Evaluation Criteria for Visibility)

2 Score: There was a clear gloss difference.
1 Score: There was a gloss difference, but the gloss difference was less clear than that in the evaluation of "score 2"
0 score: No gloss difference was perceived.

A: The average score according to the evaluation criteria was 1.8 or more
B+: The average score according to the evaluation criteria was 1.4 or more and less than 1.8
B: The average score according to the evaluation criteria was 1.0 or more and less than 1.4
C: The average score according to the evaluation criteria was less than 1.0

**[Table 1]**

| Table 1 | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 |
|---|---|---|---|---|---|---|---|---|---|---|---|---|---|---|---|---|---|
| Release Layer in Transfer Sheet | Uneven Portion | Binder Resin | Type | Nitrocellulose | | | | | | | | | | | | | |
| | | | Amount Added (part(s) by mass) | 100 | | | | | | | | | | | | | |
| | | Matting Agent | Type | Silica | | | | | | | | | | | | | |
| | | | Oil Absorption Value (ml/100 g) | 250 | 250 | 250 | 250 | 250 | 30 | 250 | 250 | 250 | 200 | 200 | 150 | 200 | 100 |
| | | | Average Particle Diameter (µm) | 3 | 3 | 3 | 3 | 3 | 3 | 3 | 3 | 3 | 3 | 3 | 3 | 3 | 5 |
| | | | Amount Added (part(s) by mass) | 100 | | | | | | | | | | | | | |
| | | Whether Silicone Was Added or Not | | Yes | Yes | Yes | Yes | Yes | Yes | No | No | No | No | No | No | No | No |
| | | Average Peak Height (µm) | | 4.3 | 4.3 | 4.3 | 4.3 | 4.3 | 3.2 | 4.3 | 4.3 | 4.3 | 4.1 | 4.1 | 3.3 | 4.1 | 3.2 |
| | | Average Height (µm) | | 1.8 | 1.8 | 1.8 | 1.8 | 1.8 | 2.5 | 1.8 | 1.8 | 1.8 | 2.0 | 2.0 | 2.2 | 2.0 | 2.5 |
| | | Variation (%) In Peak Height (Variation Variable = Standard Deviation/Mean) | | 59 | 59 | 59 | 59 | 59 | 30 | 59 | 59 | 59 | 52 | 52 | 41 | 52 | 30 |
| | Flat Portion | Whether Print is Formed on Uneven Portion or Not | | No | No | No | No | No | No | Yes | Yes | Yes | Yes | Yes | Yes | Yes | Yes |
| | | Thickness (µm) | | 1.0 | 2.5 | 3.5 | 0.5 | 8.0 | 2.5 | 1.0 | 2.5 | 3.5 | 2.5 | 0.5 | 1.0 | 8.0 | 2.5 |
| | Whether Release Layer and Transfer Layer are in Contact or Not | | | Yes | Yes | Yes | Yes | Yes | Yes | Yes | Yes | Yes | Yes | Yes | Yes | No | No |
| Decorative Molded Article | Protrusions of Uneven Profile on Surface Are Positioned Above Flat Portion | | | OK | OK | OK | OK | OK | OK | OK | OK | OK | OK | OK | OK | NG | NG |
| | Visibility of Uneven Profile on Surface from Various Angles | | | A | A | A | A | A | B- | A | A | A | A | A | B+ | c | c |

Each of the transfer sheets of Examples 1 to 12 is a transfer sheet comprising a transfer layer on a release sheet, wherein the release sheet comprises, in order from the transfer layer side, a release layer and a substrate, wherein the release layer comprises an uneven portion containing a binder resin and a matting agent and having a plurality of protrusions on the transfer layer side; and a flat portion whose surface on the transfer layer side is relatively flatter than the uneven portion, and wherein the plurality of protrusions of the uneven portion of the release layer are in contact with the transfer layer. The transfer sheets of Examples 1 to 12 were capable of imparting, to the surface of a decorative molded article, an uneven profile readily visible when observed from various angles.

### Reference Signs List

- 10: Transfer sheet
- 20: Release sheet
- 22: Substrate
- 23: Release layer
- 24: Uneven portion
- 25: Flat portion
- 30: Transfer layer
- 32: Protective layer
- 34: Primer layer
- 36: Print layer
- 38: Adhesive layer
- 40: Decorative molded article
- 41: Decorative molded article with a transferring substrate
- 42: Adherend

## Claims

1. A transfer sheet comprising a transfer layer on a release sheet,
wherein the release sheet comprises, in order from the transfer layer side, a release layer and a substrate,
wherein the release layer comprises:
an uneven portion containing a binder resin and a matting agent and having a plurality of protrusions on the transfer layer side; and
a flat portion whose surface on the transfer layer side is relatively flatter than the uneven portion, and
wherein the plurality of protrusions of the uneven portion of the release layer are in contact with the transfer layer.

2. The transfer sheet according to claim 1, wherein a surface of the transfer layer in contact with the uneven portion has an uneven profile as a result of being in contact with the uneven portion, and
wherein tips of the plurality of protrusions included in the uneven profile of the transfer layer are positioned closer to the substrate than a surface of the transfer layer in contact with the flat portion.

3. The transfer sheet according to claim 1 or 2, wherein the matting agent contained in the uneven portion has an oil absorption value of 150 ml/100 g or more.

4. The transfer sheet according to claim 1 or 2, wherein the plurality of protrusions of the uneven portion have an average peak height of 3.3 µm or more.

5. The transfer sheet according to claim 1 or 2, wherein the flat portion has a thickness that is 5% or more and 650% or less of an average height of the uneven portion.

6. The transfer sheet according to claim 1 or 2, wherein the flat portion contains the matting agent.

7. A decorative molded article in which the transfer layer of the transfer sheet according to claim 1 or 2 is laminated on an adherend.

8. A method for producing a decorative molded article, comprising the steps of:
adhering the transfer layer of the transfer sheet according to claim 1 or 2 to an adherend to laminate the transfer sheet on the adherend; and
peeling off the release sheet of the transfer sheet to transfer the transfer layer onto the adherend.
